# EUROPÄISCHE PATENTANMELDUNG

(11) **EP 4 451 294 A1**
(43) Veröffentlichungstag der Anmeldung: **23.10.2024**
(21) Anmeldenummer: 24164331.1
(22) Anmeldetag: 19.03.2024
(51) Int. Cl.: H01B 13/012, B60R 16/02

(54) **VORRICHTUNG, SYSTEM UND VERFAHREN ZUR MONTAGE VON KABELBÄUMEN**

(30) Priorität: 18.04.2023 DE 102023109659
(71) Anmelder: Lisa Dräxlmaier GmbH, 84137 Vilsbiburg (DE)
(72) Erfinder: Kagerhuber, Manuel, 84140 Gangkofen (DE); Reiter, Magdalena, 84155 Bodenkirchen (DE)

(57) **Zusammenfassung**

Die Erfindung betrifft eine Vorrichtung zur Montage von Kabelbäumen mit wenigstens einer steuerbaren Kabelgabel (10, 10a) zur Aufnahme mehrerer Kabel (31), wobei die Kabelgabel (10, 10a) wenigstens eine Klemmmechanik (13) zum Bündeln und Fixieren der Kabel (31) zu einem Kabelbündel (30) aufweist, die mit einem Antrieb (15) kraftübertragend verbunden ist, und wobei eine Bewegungseinrichtung (16) zum Bewegen der Kabelgabel (10, 10a) so vorgesehen ist, dass zum Spannen des Kabelbündels (30) ein Leitungsweg für das Kabelbündel (30) veränderbar ist. Ferner betrifft die Erfindung ein System mit einer solche Vorrichtung und ein Montageverfahren.

## Beschreibung

### Technisches Gebiet

Die vorliegende Erfindung betrifft eine Vorrichtung zur Montage von Kabelbäumen. Ferner befasst sich die Erfindung mit einem System und einem Verfahren zur Montage von Kabelbäumen.

### Stand der Technik

Aus der Praxis ist es bekannt, Kabelbäume für Kraftfahrzeuge hauptsächlich manuell zu fertigen. Dazu sind meist mehrere gabelförmige Leitungshalter, sogenannte Kabelgabeln, auf einer Montageplatte befestigt. Die Kabelgabeln umfassen eine Aufnahme für Kabel, die nach oben hin geöffnet ist.

Bei der Montage werden die einzelnen Kabel in die Aufnahmen der Kabelgabeln eingelegt, wobei die einzelnen Zweige bzw. Abgänge des Kabelbaums entsprechend verzweigt ausgelegt werden.

Die in die Kabelgabeln eingelegten Kabel jedes Zweigs bzw. Abgangs bilden gemeinsam ein Kabelbündel, das zunächst gespannt werden muss, um eine entsprechende Fixierung des Kabelbündels herbeiführen zu können. Das Spannen erfolgt manuell ebenso wie das anschließende Fixieren des Kabelbündels durch Umwickeln mit einem Wicklungsband. In einigen Fällen ist diese Tätigkeit nicht von einer Person alleine zu bewerkstelligen, so dass hierfür zwei Personen eingesetzt werden müssen.

Insgesamt ist das Montieren von Kabelbäumen daher zeitaufwändig, personalintensiv und folglich kostspielig.

### Beschreibung der Erfindung

Es ist Aufgabe der Erfindung, eine Vorrichtung zur Montage von Kabelbäumen anzugeben, die es ermöglicht, den Montageprozess zu beschleunigen und insbesondere zu automatisieren. Ferner ist es Aufgabe der Erfindung, ein System und ein Verfahren zur Montage von Kabelbäumen unter Verwendung einer solchen Vorrichtung anzugeben.

Erfindungsgemäß wird diese Aufgabe durch die Vorrichtung gemäß Patentanspruch 1, das System gemäß Patentanspruch 8 und das Verfahren gemäß Patentanspruch 10 gelöst.

Konkret beruht die Erfindung auf dem Gedanken, eine Vorrichtung zur Montage von Kabelbäumen mit wenigstens einer steuerbaren Kabelgabel zur Aufnahme wenigstens eines Kabels anzugeben, wobei die Kabelgabel wenigstens eine Klemmmechanik zum Fixieren des Kabels, insbesondere zum Bündeln und Fixieren mehrerer Kabel zu einem Kabelbündel, aufweist, die mit einem Antrieb kraftübertragend verbunden ist. Ferner ist eine Bewegungseinrichtung zum Bewegen der Kabelgabel so vorgesehen, dass zum Spannen des Kabels, insbesondere des Kabelbündels, ein Leitungsweg für das Kabel, insbesondere das Kabelbündel, veränderbar ist.

Die Erfindung reduziert den Aufwand bei der Montage von Kabelbäumen, indem zumindest ein Teilschritt bei der Montage durch die erfindungsgemäße Vorrichtung automatisiert wird. Konkret wird durch die mit dem Antrieb verbundene Klemmmechanik einerseits erreicht, dass das Kabelbündel fixiert wird, so dass sich einzelne Kabel nicht mehr lösen können.

Anstelle einer Kabelgabel kann die Vorrichtung auch eine Montageaufnahme oder Bauprüfaufnahme umfassen. Insbesondere bei Verwendung einer Montageaufnahme oder Bauprüfaufnahme kann die Klemmmechanik durch eine Verriegelung ersetzt sein. Bei einer Montageaufnahme oder Bauprüfaufnahme handelt es sich üblicherweise um eine Aufnahmeeinrichtung für endständig an dem Kabel oder den Kabeln angeordnete Gehäuse, beispielsweise Steckergehäuse oder sonstige Anbauteile. Die Kabel in einem solchen Steckergehäuse sind bereits gebündelt, so dass die Montageaufnahme oder Bauprüfaufnahme lediglich eine Verriegelung benötigt, um die gebündelten Kabel zu fixieren und anschließend zu spannen.

Besonders vorteilhaft ist es, dass zusätzlich die Bewegungseinrichtung dafür sorgt, dass das in der Kabelgabel, der Montageaufnahme oder der Bauprüfaufnahme fixierte Kabelbündel gespannt werden kann. Ein manuelles Spannen des Kabelbündels entfällt, was den nachfolgenden Montageschritt des Umwickelns des Kabelbündels erleichtert. Dies führt zu einer Zeiteinsparung, reduziert den Personalaufwand und spart damit erheblich Kosten ein. Zudem bietet die erfindungsgemäße Vorrichtung eine Voraussetzung, um das Montieren von Kabelbäumen weiter zu automatisieren, beispielsweise durch Verwendung eines Wickelautomaten, der das gespannte Kabelbündel automatisiert mit einem Wicklungsband umwickelt.

Generell sind verschiedene Bewegungen denkbar, die durch die Bewegungseinrichtung ausgelöst werden können und ein Spannen des Kabelbündels bewirken. Allen Bewegungen ist jedenfalls gemeinsam, dass dadurch ein Leitungsweg, also eine gerade Strecke zwischen zwei Punkten des Kabelbündels, verändert, insbesondere verlängert wird.

Eine Möglichkeit, um ein solches Spannen des Kabelbündels zu bewirken, besteht darin, den Abstand zwischen zwei Kabelgabeln zu erhöhen. Dazu kann die Bewegungseinrichtung beispielsweise eine Lineareinheit zum translatorischen Bewegen der steuerbaren Kabelgabel aufweisen. Eine Veränderung eines Leitungswegs für das Kabelbündel ist alternativ oder zusätzlich erreichbar, wenn die Bewegungseinrichtung eine Dreheinheit zum Drehen der steuerbaren Kabelgabel um eine Hochachse aufweist. Ferner ist es möglich, dass die Bewegungseinrichtung ergänzend oder anstelle einer Linear- und/oder Dreheinheit eine Hubeinheit zum Bewegen der steuerbaren Kabelgabel entlang einer Hochachse aufweist. Eine Kombination von Lineareinheit, Dreheinheit und Hubeinheit ist besonders bevorzugt.

Bei einer vorteilhaften Ausführungsform der erfindungsgemäßen Vorrichtung weist die steuerbaren Kabelgabel eine Kraftüberwachungseinrichtung zur Überwachung der Klemmkraft der Klemmmechanik und/oder einer Spannkraft der Bewegungseinrichtung auf. Die steuerbare Kabelgabel soll generell für verschiedene Kabelbäume und unterschiedliche Kabelbündel eingesetzt werden können. Da sich die einzelnen Kabelbündel hinsichtlich der Anzahl und Querschnitte der Kabel unterscheiden, ist die Verwendung einer Kraftüberwachungseinrichtung vorteilhaft, um sicherzustellen, dass die Kabelbündel nicht beschädigt werden, gleichzeitig jedoch eine ausreichend hohe Klemmkraft aufgebracht wird, damit das Kabelbündel beim Spannen nicht in der Kabelgabel verrutscht.

Im Übrigen kann vorgesehen sein, dass die Bewegungseinrichtung generell kraftüberwacht ist, um die Spannkraft zu überwachen, welche mittels der Bewegungseinrichtung auf das Kabelbündel ausgeübt wird. Die Kraftüberwachungseinrichtung verhindert so eine Beschädigung des Kabelbündels bzw. einzelner Kabel beim Spannen des Kabelbündels.

Die Kraftüberwachung kann beispielsweise durch Messen der Stromaufnahme des Antriebs erfolgen. Generell kann der Antrieb ein elektrischer Direktantrieb oder ein pneumatischer Antrieb sein. Bei einem pneumatischen Antrieb kann die Kraftüberwachung durch Einstellung und Messung des pneumatischen Drucks erfolgen.

Die Klemmmechanik kann bei einer bevorzugten Ausführungsform einen drehgelenkig mit dem Antrieb verbundenen Bügel aufweisen, der von einer Öffnungsstellung, in welcher der Bügel einen Kabel-Aufnahmebereich zwischen zwei starren Schenkeln der steuerbaren Kabelgabel freigibt, in eine Bündelungsstellung verschwenkbar sein, in welcher der Bügel in den Kabel-Aufnahmebereich eingreift, um zwischen den Schenkeln angeordneten lose Kabel zu bündeln. Eine derart gestaltete Klemmmechanik ist besonders effektiv und führt zu einer guten Bündelung von Kabeln zu einem Kabelbündel, wobei mittels des Bügels gleichzeitig auch eine Fixierung des Kabelbündels erfolgen kann.

Wenn der Bügel eine gebogene Form aufweist, kann auf diese Weise die Form des Kabelbündels vorteilhaft beeinflusst werden. Insbesondere kann so ein Kabelbündel erzeugt werden, welches einen im Wesentlichen kreisförmigen Querschnitt aufweist, der sich besonders gut zum Umwickeln mit einem Wicklungsband eignet.

In einer alternativen Ausführungsform ist vorgesehen, dass die Klemmmechanik zwei bewegliche Schenkel der steuerbaren Kabelgabel aufweist, die über ein Scherengelenk so mit dem Antrieb verbunden sind, dass die beweglichen Schenkel von einer Öffnungsstellung, in welcher ein Kabelaufnahmebereich zwischen den beweglichen Schenkeln zum Einlegen von Kabeln zugänglich ist, in eine Bündelungsstellung überführbar sind, in welcher die beweglichen Schenkel zangenartig zusammengeführt sind. Bei dieser Variante erfolgt das Bündeln der Kabel zu einem Kabelbündel durch die beweglichen Schenkel eines Scherengelenks. Die Verwendung eines Scherengelenks vermeidet den Einsatz zusätzlicher Bauteile, da die Gabelschenkel selbst zum Bündeln der Kabel eingesetzt werden.

Ein nebengeordneter Aspekt der Erfindung betrifft ein System zur Montage von Kabelbäumen mit einer Montageplatte und wenigstens einer zuvor beschriebenen Vorrichtung. Bei dem erfindungsgemäßen System ist die steuerbare Kabelgabel der zuvor beschriebenen Vorrichtung zu einer weiteren Kabelgabel beabstandet positioniert und mittels der Bewegungseinrichtung gegenüber der Montageplatte relativbewegbar. Die weitere Kabelgabel kann eine aus dem Stand der Technik bekannte Kabelgabel ohne weitere Funktionalität sein. Es ist allerdings auch möglich, dass die weitere Kabelgabel zumindest eine Klemmmechanik aufweist, wie sie bei der hier beschriebenen, steuerbaren Kabelgabel vorgesehen ist. Generell ist es denkbar, dass die Montageplatte mit mehreren steuerbaren Kabelgabeln ausgerüstet ist, um einzelne Teilstränge des Kabelbaums individuell bündeln und spannen zu können.

Die Montageplatte kann dabei ein Baubrett zur Kabelbaummontage beziehungsweise ein Legebrett zur Kabelbaummontage sein.

Bei einer bevorzugten Weiterbildung des erfindungsgemäßen Systems ist ein Wickelautomat zum Umwickeln des Kabelbündels vorgesehen, der zwischen wenigstens zwei Kabelgabeln, Montageaufnahmen, Bauprüfaufnahmen oder Kombinationen davon entlang des Leitungswegs verlagerbar ist. Insbesondere kann der Wickelautomat entlang des Leitungswegs stufenlos verschiebbar sein. Die Ergänzung des Systems mit einem Wickelautomaten erhöht den Automatisierungsgrad bei der Montage des Kabelbaums. So kann das gespannte Kabelbündel automatisiert mit einem Wicklungsband umwickelt werden. Ein manuelles Umwickeln wird damit vermieden, wodurch Personaleinsatz und Zeitaufwand reduziert werden. Außerdem kann durch das automatisierte Umwickeln des Kabelbündels eine hohe Wiederholgenauigkeit bei der Montage mehrerer Kabelbäume erzielt werden.

Die vorliegende Erfindung betrifft zudem ein Verfahren zur Montage von Kabelbäumen mit einem zuvor beschriebenen System, wobei das Verfahren die folgenden Schritte umfasst.
- Einlegen mehrerer einzelner Kabel in zwei benachbarte Kabelgabeln, wobei wenigstens eine Kabelgabel durch eine steuerbare Kabelgabel gebildet ist;
- Bündeln und Fixieren der Kabel zur Bildung eines Kabelbündels durch Schließen der Klemmmechanik der steuerbaren Kabelgabel;
- Spannen des Kabelbündels durch Drehen und/oder Höhenverstellen und/oder lineares Verfahren der steuerbaren Kabelgabel in eine erste Richtung;
- Umwickeln des gespannten Kabelbündels mit einem Wicklungsband, insbesondere mittels eines Wickelautomaten; und
- Entspannen des Kabelbündels durch Drehen und/oder Höhenverstellen und/oder lineares Verfahren der steuerbaren Kabelgabel in eine zweite Richtung, die der ersten Richtung entgegengesetzt ist.

Das hier beschriebene Verfahren ermöglicht die Teilautomatisierung des Montageprozesses für Kabelbäume und er trägt daher erheblich zu einer Kosteneinsparung bei, da Personaleinsatz und Zeitaufwand bei der Montage reduziert werden. Außerdem ist bei der bevorzugten Verwendung eines Wickelautomaten eine hohe Wiederholgenauigkeit erzielbar, insbesondere wenn der Wickelautomat eine kraftgesteuerte beziehungsweise kraftüberwachte Umwicklung des Kabelbündels ermöglicht, also das Wicklungsband mit gleicher Wicklungskraft um jedes Kabelbündel gewickelt wird.

Die im Zusammenhang mit der erfindungsgemäßen Vorrichtung beschriebenen Vorteile und Variationen gelten analog für das hier offenbarte Verfahren. Insbesondere kann die Kabelgabel durch eine Montageaufnahme oder Bauprüfaufnahme ersetzt werden, wobei anstelle einer Klemmmechanik eine Fixiermechanik zum Einsatz kommen kann.

### Kurze Beschreibung der Zeichnungen

Die oben beschriebenen, unterschiedlichen und beispielhaften Merkmale können erfindungsgemäß miteinander kombiniert werden, soweit dies technisch sinnvoll und geeignet ist. Dies gilt unabhängig davon, ob die jeweiligen Merkmale als Vorrichtungs- und/oder als Verfahrensmerkmale offenbart sind. Weitere Merkmale, Vorteile und Ausführungsformen der Erfindung ergeben sich aus der nachfolgenden Figurenbeschreibung, sowie den in den Figuren dargestellten Ausführungsbeispielen. Es zeigen:

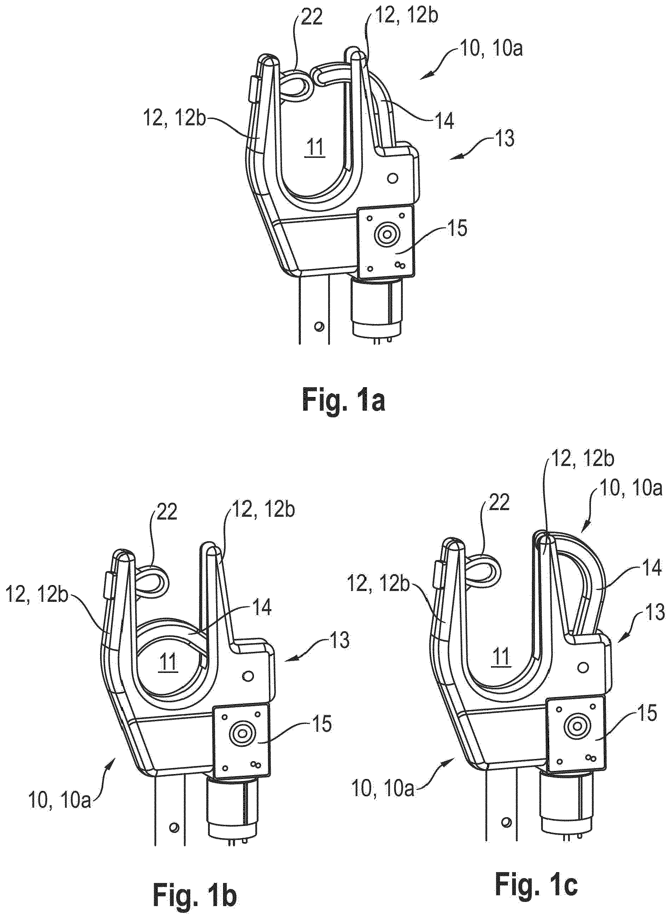

- Fig. 1a: eine erfindungsgemäße Vorrichtung mit einer steuerbaren Kabelgabel nach einem ersten Ausführungsbeispiel, wobei sich die Klemmmechanik in einer Sammelstellung befindet,
- Fig. 1b: die Vorrichtung gemäß Fig. 1a mit der Klemmmechanik in einer Bündelungsstellung,
- Fig. 1b: die Vorrichtung gemäß Fig. 1a mit der Klemmmechanik in einer Öffnungsstellung,
- Fig. 2a: eine erfindungsgemäße Vorrichtung mit einer steuerbaren Kabelgabel nach einem zweiten Ausführungsbeispiel wobei sich die Klemmmechanik in einer Öffnungsstellung befindet,
- Fig. 2b: die Vorrichtung gemäß Fig. 2a mit der Klemmmechanik in der Bündelungsstellung,
- Fig. 3a: eine perspektivische Ansicht eines ersten Ausführungsbeispiels eines erfindungsgemäßen Systems mit der Vorrichtung gemäß Fig. 1,
- Fig. 3b: eine Draufsicht auf das System gemäß Fig. 3a in einer Ausgangsstellung,
- Fig. 3c: eine Draufsicht auf das System gemäß Fig. 3a in einer Spannstellung,
- Fig. 4a: eine Draufsicht auf ein zweites Ausführungsbeispiels eines erfindungsgemäßen Systems mit der Vorrichtung gemäß Fig. 1 in einer Ausgangsstellung,
- Fig. 4b: eine Draufsicht auf das System gemäß Fig. 4a in einer Spannstellung,
- Fig. 5a: eine Draufsicht auf ein drittes Ausführungsbeispiels eines erfindungsgemäßen Systems mit der Vorrichtung gemäß Fig. 1 in einer Ausgangsstellung,
- Fig. 5b: eine Draufsicht auf das System gemäß Fig. 5a in einer Spannstellung,
- Fig. 6a: eine perspektivische Ansicht eines erfindungsgemäßen Systems zur Montage von Kabelbäumen mit mehreren Kabelgabeln in einer Ausgangsstellung und
- Fig. 6b: das System gemäß Fig. 6a, wobei eine Kabelgabel eine Spannstellung eingenommen hat.

### Wege zur Ausführung der Erfindung

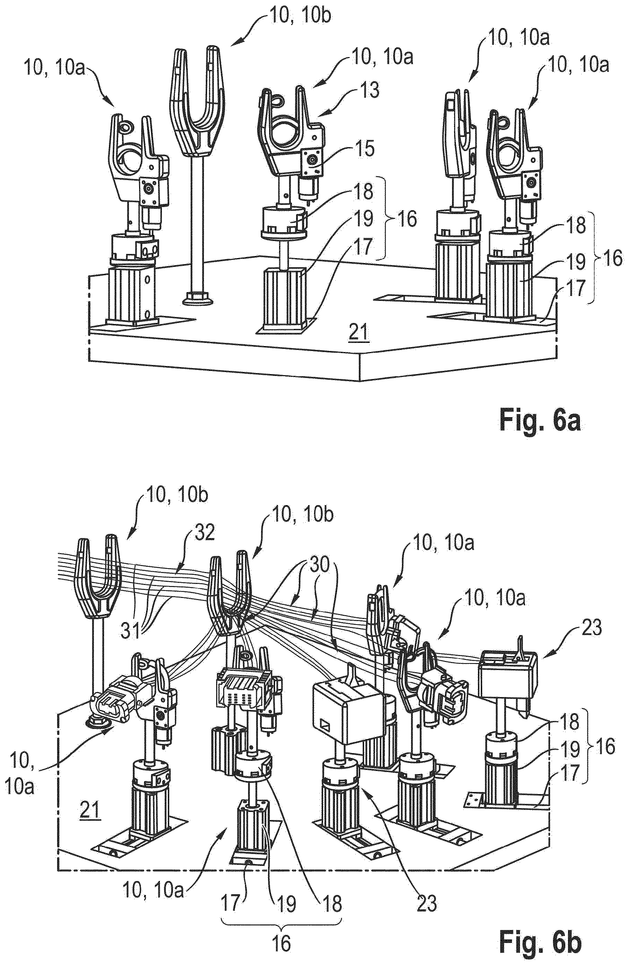

In den beigefügten Zeichnungen sind mehrere Vorrichtungen zur Montage von Kabelbäumen gezeigt, die nach unterschiedlichen Ausführungsbeispielen ausgebildet sind. Die Vorrichtungen weisen jeweils eine Kabelgabel 10 auf, wobei im Rahmen der vorliegenden Anmeldung zwischen einer steuerbaren Kabelgabel 10a und einer starren Kabelgabel 10b unterschieden wird. Die Erfindung bezieht sich im Wesentlichen auf die steuerbare Kabelgabel 10a, ist jedoch auch auf Montageaufnahmen und/oder Bauprüfaufnahmen, insbesondere eine Steckeraufnahme 23, wie sie beispielsweise in Fig. 6b gezeigt ist, übertragbar.

Generell bilden Kabelgabeln 10 im Sinne der vorliegenden Anmeldung jeweils gabelförmige Leitungshalter, die geeignet sind, um eine Vielzahl von Kabeln 31 zu halten. Dazu sind an der Kabelgabel 10 jeweils Schenkel 12 ausgebildet, die einen im Wesentlichen U-förmigen Kabel-Aufnahmebereich 11 begrenzen. In den Kabel-Aufnahmebereich 11 können mehrere Kabel 31 einzeln eingelegt werden, um zu einem Kabelbündel 30 zusammengefasst zu werden.

Bei einer steuerbaren Kabelgabel 10a ist im Unterschied zu einer starren Kabelgabel 10b zusätzlich eine Klemmmechanik 13 vorgesehen, die mit einem Antrieb 15 zusammenwirkt. Der Antrieb 15 ist bei dem Ausführungsbeispiel gemäß Fig. 1a und 1b als Elektromotor ausgebildet, der über ein Getriebe mit einem verschwenkbaren Bügel 14 antriebsverbunden ist. Der Bügel 14 ist seitlich an einem der Schenkel 12 drehbeweglich gelagert und weist eine gekrümmte Form auf.

Die Schenkel 12 der steuerbare Kabelgabel 10a gemäß Fig. 1a und 1b sind als starre Schenkel 12b ausgebildet. Das bedeutet, dass die Schenkel 12, 12b im Wesentlichen nicht selbst beweglich sind. Einer der starren Schenkel 12b, an welchem auch der Bügel 14 angelenkt ist, weist einen Spalt auf, den der Bügel 14 bei zum Sammeln und Klemmen des Kabelbündels 30 durchgreifen kann.

Fig. 1a zeigt eine Sammelstellung der Klemmmechanik 13, insbesondere des Bügels 14. In der Sammelstellung berührt die Spitze des Bügels 14 ein Federelement 22, das an einem gegenüberliegenden starren Schenkel 12b der steuerbaren Kabelgabel 10a angeordnet ist. Das Federelement 22 ist so elastisch, dass es sich verformt, sobald ein Kabel 31 zwischen Federelement 22 und Bügel 14 hindurch in den Kabel-Aufnahmebereich 11 gedrückt wird. Auf diese Weise können mehrere Kabel 31 einzeln in den Kabel-Aufnahmebereich 11 eingelegt werden, wobei durch den Bügel 14 und das Federelement 22 gemeinsam vermieden wird, dass Kabel 31 aus dem Kabel-Aufnahmebereich 11 herausrutschen. Bei einer weiteren Bewegung des Bügels 14 in Richtung zur Bündelungsstellung (Fig. 1b) weicht das Federelement 22 aufgrund seiner Elastizität aus und lässt den Bügel 14 passieren.

Sobald die Kabel 31 in dem Kabel-Aufnahmebereich 11 positioniert sind, kann der Bügel 14 mittels des Antriebs 15 in eine Bündelungsstellung überführt werden, wie in Fig. 1b gezeigt ist. In der Bündelungsstellung greift der Bügel 14 in den Kabel-Aufnahmebereich 11 ein, wobei der Bügel 14 bis zum gegenüberliegenden Schenkel 12, 12b reicht. Der Bügel 14 bildet mit der Begrenzung des Kabel-Aufnahmebereichs 11 im Wesentlichen eine Öse, die den für die Kabel 31 verfügbaren Raum einschränkt. Die Kabel 31 werden so zusammengedrückt, also gebündelt, und bilden ein Kabelbündel 30. Durch eine entsprechende Klemmkraft, die vorzugsweise durch eine Kraftüberwachungseinrichtung überwacht wird, erfolgt zusätzlich eine kraftschlüssige Fixierung des Kabelbündels 30. Das Kabelbündel 30 kann nun mittels eine Bewegungseinrichtung 16 der steuerbaren Kabelgabel 10a gespannt und mit einem Wicklungsband umwickelt werden.

Um das umwickelte Kabelbündel 30 anschließend aus der steuerbaren Kabelgabel 10a entnehmen zu können, wird der Bügel 14 in eine Öffnungsstellung überführt. In der Öffnungsstellung, die in Fig. 1c gezeigt ist, ist der Bügel 14 so weit aus dem Kabel-Aufnahmebereich 11 herausbewegt, dass der Bügel 14 nicht mehr in diesen hineinragt. Zwischen dem Federelement 22 und dem starren Schenkel 12b, an welchem auch der Bügel 14 angelenkt ist, entsteht so eine Öffnung, über die das umwickelte Kabelbündel 30 entnommen werden kann.

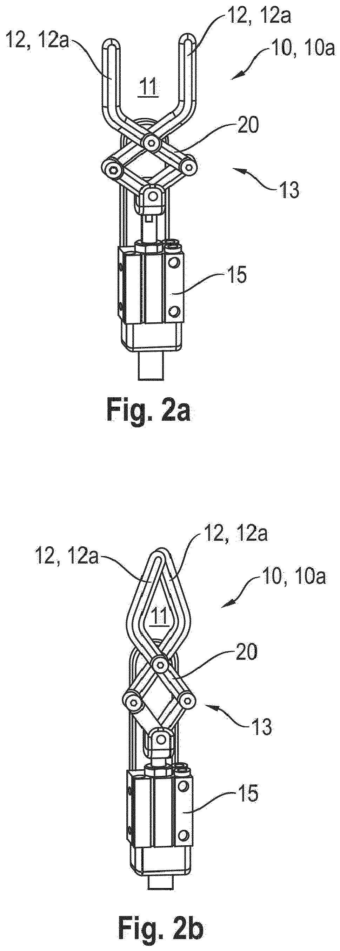

In den Fig. 2a und 2b ist ein alternatives Ausführungsbeispiel einer Vorrichtung zur Montage von Kabelbäumen, insbesondere einer steuerbaren Kabelgabel 10a, gezeigt. Die steuerbare Kabelgabel 10a umfasst einen Antrieb 15 und eine Klemmmechanik 13. Der Antrieb 15 ist vorzugsweise ein pneumatischer Linearantrieb, der direkt auf das Scherengelenk 20 wirkt.

Die Klemmmechanik 13 weist zwei Schenkel 12 auf, die bei diesem Ausführungsbeispiel jedoch als bewegliche Schenkel 12a ausgebildet sind. Konkret ist der Antrieb 14 mit einem Scherengelenk 20 gekoppelt, das die beweglichen Schenkel 12a umfasst. Die beweglichen Schenkel 12a bilden ebenfalls einen Kabel-Aufnahmebereich 11, der im Wesentlichen U-förmig ausgebildet ist.

Fig. 2a zeigt die Klemmmechanik 13 in einer Öffnungsstellung, wobei die beiden beweglichen Schenkel 12a den maximalen Abstand zueinander einnehmen. Insbesondere können die beweglichen Schenkel 12a parallel zueinander ausgerichtet sein, um den Kabel-Aufnahmebereich 11 zu bilden.

Um die Klemmmechanik 13 in eine Bündelungsstellung zu überführen, wie sie in Fig. 2b gezeigt ist, wird der Antrieb 15 betätigt, wodurch das Scherengelenk 20 gestreckt wird. Dadurch werden zumindest die Spitzen der beweglichen Schenkel 12a zusammengeführt, wodurch sich eine Art Öse zwischen den beweglichen Schenkeln 12a bildet, die die Kabel 31 zu einem Kabelbündel 30 zusammenfasst beziehungsweise bündelt. Dabei wird gleichzeitig eine Klemmkraft auf das Kabelbündel 30 ausgeübt, die zu einer kraftschlüssigen Fixierung des Kabelbündels 20 in der steuerbaren Kabelgabel 10a führt.

Die Klemmmechanik 13 umfasst ferner eine hier nicht dargestellte Kraftüberwachungseinrichtung, die die Klemmkraft überwacht. Eine Steuerung stellt die Klemmkraft vorzugsweise so ein, dass die kraftschlüssige Fixierung des Kabelbündels 30 so erfolgt, dass eine Beschädigung der Kabel 31 vermieden wird.

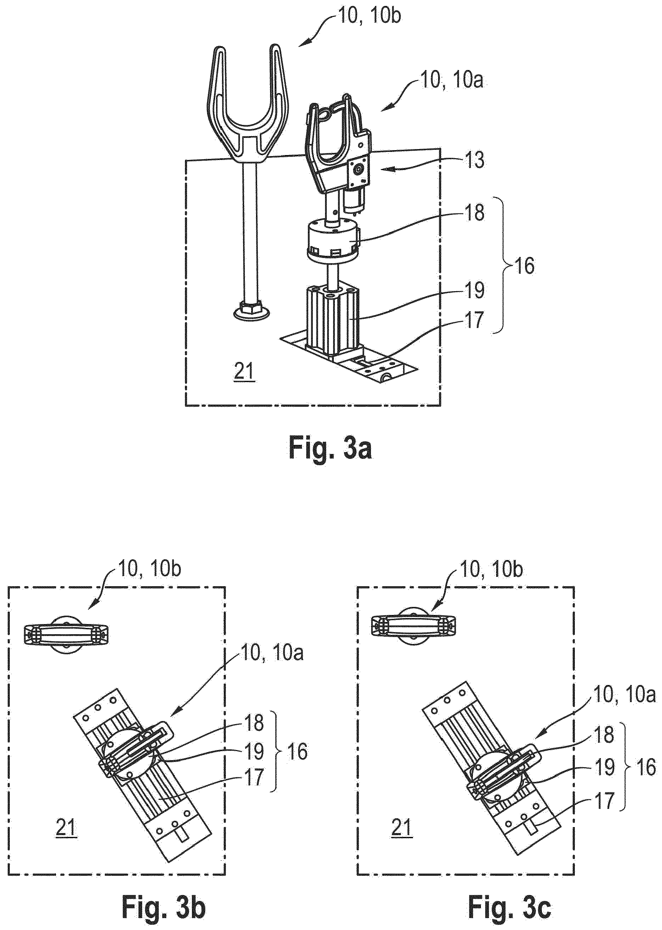

In den Fig. 3a-5b sind verschiedene Varianten für eine Bewegungseinrichtung 16 für die Kabelgabel 10 gezeigt. Alle hier dargestellten Varianten einer Bewegungseinrichtung 16 sind sowohl für die Kabelgabel 10 gemäß Fig. 1a und 1b als auch für die Kabelgabel 10 gemäß Fig. 2a und 2b geeignet. Ferner können alle hier beschriebenen Bewegungseinrichtungen 16 miteinander kombiniert werden.

So zeigen die Fig. 3a, 3b und 3c eine Bewegungseinrichtung 16, die eine Lineareinheit 17 umfasst. Die Lineareinheit 17 ist vorzugsweise in einer Montageplatte 21 eines Systems integriert, das die Kabelgabel 10, insbesondere wenigstens eine steuerbare Kabelgabel 10a und weitere Kabelgabeln 10, 10a, 10b umfasst. In Fig. 3a ist insbesondere eine weitere Kabelgabel 10 gezeigt, die als starre Kabelgabel 10b ausgebildet ist.

Die Lineareinheit 17 trägt die gesamte steuerbare Kabelgabel 10a und weist vorzugsweise einen Linearantrieb auf, der eine lineare, translatorische Bewegung der Kabelgabel 10, 10a ermöglicht. Der Linearantrieb kann beispielsweise durch einen Spindeltrieb gebildet sein.

Fig. 3b zeigt in einer Draufsicht eine Ausgangsstellung der steuerbaren Kabelgabel 10a, bei welcher die steuerbare Kabelgabel 10a so positioniert ist, dass ein kleinstmöglicher Abstand zwischen der steuerbaren Kabelgabel 10a und der starren Kabelgabel 10b besteht. In dieser Ausgangsstellung werden im Montageprozess die Kabel 31 in die beiden Kabelgabeln 10, 10a, 10b eingelegt.

Anschließend wird die Klemmmechanik 13 der steuerbaren Kabelgabel 10a betätigt, so dass die Kabel 31 zu einem Kabelbündel 30 gebündelt und als Kabelbündel 30 fixiert werden. Die Klemmkraft ist dabei so eingestellt, dass eine gute kraftschlüssige Fixierung des Kabelbündels 30 erfolgt.

Fig. 3c zeigt eine Spannstellung der Lineareinheit 17, bei welcher die steuerbare Kabelgabel 10a durch die Lineareinheit 17 so positioniert ist, dass der Abstand zwischen der starren Kabelgabel 10b und der steuerbaren Kabelgabel 10a maximal ist. Da das Kabelbündel 30 in der steuerbaren Kabelgabel 10a klemmend fixiert ist, erfolgt durch die Bewegung der Lineareinheit 17 von der starren Kabelgabel 10b weg ein Spannen des Kabelbündels 30 zwischen der starren Kabelgabel 10b und der steuerbaren Kabelgabel 10a. In diesem gespannten Zustand des Kabelbündels 30 ist ein Umwickeln mit einem Wicklungsband besonders einfach möglich.

In diesen Zusammenhang ist darauf hinzuweisen, dass der Vorgang des Spannens des Kabels 31 bzw. Kabelbündels 30 nicht zwingend zwischen einer starren Kabelgabel 10b und einer steuerbaren Kabelgabel 10a erfolgen muss. Es ist auch möglich, zwei steuerbare Kabelgabeln 10a oder eine Kombination aus einer steuerbaren Kabelgabel 10a mit einer Montageaufnahme oder Bauprüfaufnahme, wie beispielsweise der Steckeraufnahme 23 gemäß Fig. 6b.

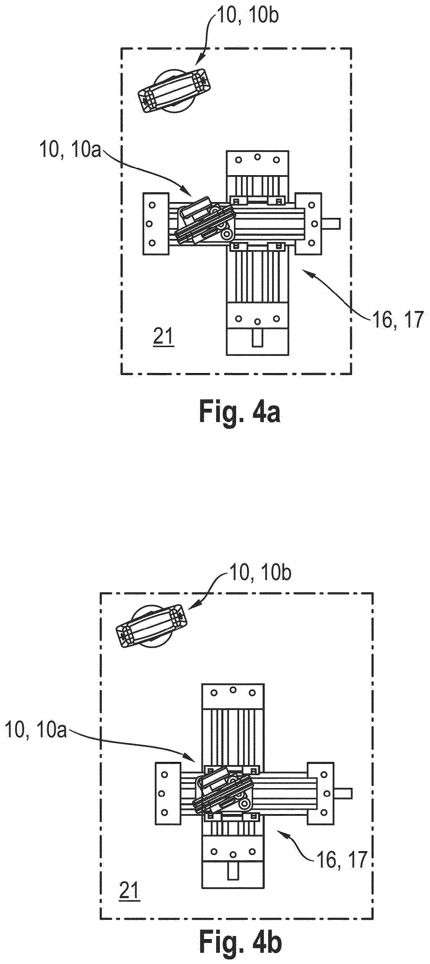

Die Fig. 4a und 4b zeigen eine Variante der Lineareinheit 17, wobei die Lineareinheit 17 zwei Linearantriebe aufweist. Die Lineareinheit 17 bildet in diesem Fall einen x-y-Linearantrieb, so dass die steuerbaren Kabelgabel 10a in mehreren Richtungen translatorisch auf der Montageplatte 21 bewegbar ist. In der Ausgangsstellung gemäß Fig. 4a ist die steuerbare Kabelgabel 10a so positioniert, dass der Abstand zwischen der steuerbaren Kabelgabel 10a und der starren Kabelgabel 10b minimal ist. Fig. 4b zeigt eine Spannstellung der Lineareinheit 17, bei der die beiden Linearantriebe so verfahren sind, dass der Abstand zwischen der steuerbaren Kabelgabel 10a und der starren Kabelgabel 10b maximal ist.

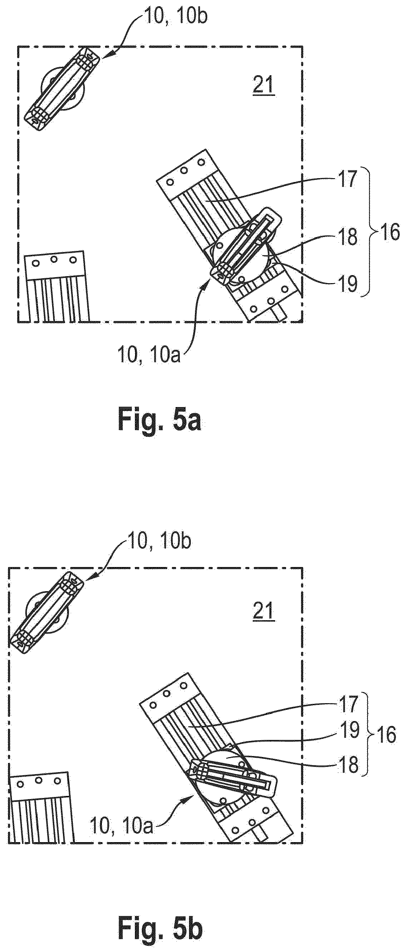

In den Fig. 5a und 5b ist eine Variante gezeigt, bei welcher die Bewegungseinrichtung 16 zusätzlich zur Lineareinheit 17 eine Dreheinheit 18 aufweist. Die Dreheinheit 18 ist vorzugsweise direkt an der steuerbaren Kabelgabel 10a angeordnet und ermöglicht das Drehen der steuerbaren Kabelgabel 10a, insbesondere der Schenkel 12 um eine Hochachse, die senkrecht auf der Lineareinheit 17 steht. Insbesondere ist die Hochachse senkrecht zur Montageplatte 21 ausgerichtet.

Fig. 5a zeigt dabei die Ausgangsstellung der Drehbewegung der Dreheinheit 18. In dieser Ausgangsstellung ist die steuerbare Kabelgabel 10a so ausgerichtet, dass ihre Schenkel 12 eine Schenkelebene aufspannen, die im Wesentlichen parallel zu einer Schenkelebene der starren Kabelgabel 10b verläuft. In Fig. 5b ist die steuerbare Kabelgabel 10a hingegen verdreht, so dass der Leitungsweg, also der Abstand zwischen zwei Punkten des Kabelbündels 30, verlängert ist. Das Kabelbündel 30 wird so zwischen der starren Kabelgabel 10b und der steuerbaren Kabelgabel 10a gespannt.

Es ist außerdem möglich, dass die Bewegungseinrichtung 16 eine Hubeinheit 19 umfasst, die es ermöglicht, die steuerbare Kabelgabel 10a anzuheben, also den Abstand zwischen den Schenkeln 12 und der Montageplatte 21 zu erhöhen.

Fig. 6a zeigt eine Montageplatte 21 mit mehreren Kabelgabeln 10, wobei eine Kabelgabel 10 als starre Kabelgabel 10b ausgebildet ist. Vier weitere Kabelgabeln 10 sind als steuerbare Kabelgabeln 10a ausgebildet. Die steuerbaren Kabelgabel 10a sind im Wesentlichen bogenförmig oder teilkreisförmig um die starre Kabelgabel 10b angeordnet.

Jede steuerbare Kabelgabel 10a umfasst eine Bewegungseinrichtung 16 mit einer Lineareinheit 17, die einen einzigen Linearantrieb aufweist. Ferner weist die Bewegungseinrichtung 16 jeder steuerbaren Kabelgabel 10a eine Dreheinheit 18 und eine Hubeinheit 19 auf.

Wie in Fig. 6a auch erkennbar ist, ist eine der steuerbaren Kabelgabeln 10a mittels der Hubeinheit 19 nach oben verlagert, wogegen die weiteren drei steuerbaren Kabelgabeln 10a in einer Ausgangsstellung vorliegen. Das Anheben der steuerbaren Kabelgabel 10a mittels der Hubeinheit 19 erhöht den Abstand zwischen einem Kabelbündel 30 und der Montageplatte 21, so dass das Kabelbündel 30 für einen Wickelautomaten leichter zugänglich ist. Insbesondere kann auf diese Weise ein Kabelbündel 30 gegenüber weiteren benachbarten Kabelbündeln 30 hervorgehoben werden, um mittels eines Wickelautomaten mit einem Wicklungsband umwickelt zu werden.

Fig. 6b zeigt einen Schritt des Montagevorgangs eines Kabelbaums, wobei der Kabelbaum mehrere Kabel 31 umfasst, die zu Kabelbündeln 30 zusammengefasst sind. Ein Kabelbaumstammbündel 32 erstreckt sich zwischen zwei starren Kabelgabeln 10b. Es ist allerdings möglich, dass zumindest eine der beiden Kabelgabeln als steuerbare Kabelgabel 10a ausgebildet ist. Das Kabelbaumstammbündel 32 ist anschließend in mehrere Kabelbündel 30 aufgeteilt, die jeweils zu einer steuerbaren Kabelgabel 10a oder einer Steckeraufnahme 23 geführt sind. Die Steckeraufnahmen 23 bilden im Wesentlichen Vorrichtungen, die jeweils einen am Ende eines Kabelbündels 30 angeordneten Stecker aufnehmen und fixieren können. Die Steckeraufnahmen 23 können analog zu den steuerbaren Kabelgabeln 10a eine Bewegungseinrichtung 16 aufweisen, wobei die Bewegungseinrichtung sowohl eine Lineareinheit 17, eine Dreheinheit 18 und/oder eine Hubeinheit 19 umfassen kann.

Wie in Fig. 6b erkennbar ist, ist jede der steuerbaren Kabelgabeln 10a und der Steckeraufnahmen 23 jeweils mit einer Lineareinheit 17 ausgestattet, die in der Montageplatte 21 angeordnet ist. Anstelle der Steckeraufnahmen 23 können auch andere Arten von Montageaufnahmen oder Bauprüfaufnahmen verwendet werden. Ferner sind bei allen steuerbaren Kabelgabeln 10a und Steckeraufnahmen 23 Hubeinheiten 19 und Dreheinheiten 18 vorgesehen.

Ferner ist in Fig. 6b zu sehen, dass drei der steuerbaren Kabelgabeln 10a so eingestellt sind, dass deren Klemmmechanik 13 jeweils die Sammelstellung einnimmt. Dies gilt für alle steuerbaren Kabelgabeln 10a in Fig. 6b, bei welchen die Hubeinheit 19 die Kabelgabel 10a in der unteren Position anordnet. Die in Fig. 6b von links aus gesehen zweite steuerbaren Kabelgabel 10a ist mittels ihrer Hubeinheit 19 hingegen nach oben verfahren bzw. angehoben.

Der Bügel 14 der angehobenen, steuerbaren Kabelgabel 10a ist in die Bündelungsstellung bewegt. Das Kabelbündel 30 zwischen der starren Kabelgabel 10b und der angehobenen, steuerbaren Kabelgabel 10a ist daher fixiert und ferner gespannt, da die angehobene, steuerbare Kabelgabel 10a zusätzlich durch die Lineareinheit 17 so verschoben ist, dass der Leitungsweg zwischen der starren Kabelgabel 10b und der angehobenen, steuerbaren Kabelgabel 10a maximal ist. In diesem Zustand ist das gespannte Kabelbündel 30 gut für einen Wickelautomaten erreichbar und kann so jedenfalls zwischen der starren Kabelgabel 10b und der angehobenen, steuerbaren Kabelgabel 10a automatisiert mit einem Wicklungsband umwickelt werden.

Die weiteren steuerbaren Kabelgabeln 10a werden anschließend sukzessive ebenfalls mittels deren Lineareinheit 17 in eine Spannstellung und mittels deren Hubeinheit 19 in eine obere Position verfahren. Zusätzlich kann die jeweilige Dreheinheit 18 betätigt werden, um das Spannen des Kabelbündels 30 zu bewirken. Der Wickelautomat wird an das jeweils gespannte Kabelbündel 30 angelegt, bis alle Kabelbündel 30 umwickelt sind. Nach demselben Prinzip erfolgt auch das Umwickeln des Kabelbaumstammbündels 32, wobei zum Spannen desselben alle steuerbaren Kabelgabeln 10a zeitgleich in die Spannstellung verfahren werden können.

Für alle Ausführungsbeispiele gilt, dass die Bewegungseinrichtung 16 vorzugsweise mit der Kraftüberwachungseinrichtung verbunden oder mit einer eigenständigen Kraftüberwachungseinrichtung ausgestattet sein kann, um eine Spannkraft zu überwachen, die auf das Kabelbündel 30 ausgeübt wird. Die Kraftüberwachungseinrichtung kann beispielsweise die Stromaufnahme der Lineareinheit 17, der Dreheinheit 18 und/oder der Hubeinheit 19 der Bewegungseinrichtung 16 kontrollieren und bei Überschreiten eines vorbestimmten Schwellwerts die Lineareinheit 17, die Dreheinheit 18 und/oder die Hubeinheit 19 dazu veranlassen, die ausgeführte Bewegung der Bewegungseinrichtung 16 zu stoppen.

### BEZUGSZEICHENLISTE

- 10: Kabelgabel
- 10a: steuerbare Kabelgabel
- 10b: starre Kabelgabel
- 11: Kabel-Aufnahmebereich
- 12: Schenkel
- 12a: beweglicher Schenkel
- 12b: starrer Schenkel
- 13: Klemmmechanik
- 14: Bügel
- 15: Antrieb
- 16: Bewegungseinrichtung
- 17: Lineareinheit
- 18: Dreheinheit
- 19: Hubeinheit
- 20: Scherengelenk
- 21: Montageplatte
- 22: Federelement
- 23: Steckeraufnahme
- 30: Kabelbündel
- 31: Kabel
- 32: Kabelbaumstammbündel

## Patentansprüche

1. Vorrichtung zur Montage von Kabelbäumen mit wenigstens einer steuerbaren Kabelgabel (10, 10a) zur Aufnahme wenigstens eines Kabels (31), wobei die Kabelgabel (10, 10a) wenigstens eine Klemmmechanik (13) zum Fixieren des Kabels (31), insbesondere zum Bündeln und Fixieren mehrerer Kabel (31) zu einem Kabelbündel (30), aufweist, die mit einem Antrieb (15) kraftübertragend verbunden ist, und wobei eine Bewegungseinrichtung (16) zum Bewegen der Kabelgabel (10, 10a) so vorgesehen ist, dass zum Spannen des Kabels (31), insbesondere des Kabelbündels (30), ein Leitungsweg für das Kabel (31), insbesondere das Kabelbündel (30), veränderbar ist.

2. Vorrichtung nach Anspruch 1
**dadurch gekennzeichnet, dass**
die Bewegungseinrichtung (16) eine Lineareinheit (17) zum translatorischen Bewegen der steuerbaren Kabelgabel (10, 10a) aufweist.

3. Vorrichtung nach Anspruch 1 oder 2
**dadurch gekennzeichnet, dass**
die Bewegungseinrichtung (16) eine Dreheinheit (18) zum Drehen der steuerbaren Kabelgabel (10, 10a) um eine Hochachse aufweist.

4. Vorrichtung nach einem der vorhergehenden Ansprüche
**dadurch gekennzeichnet, dass**
die Bewegungseinrichtung (16) eine Hubeinheit (19) zum Bewegen der steuerbaren Kabelgabel (10, 10a) entlang einer Hochachse aufweist.

5. Vorrichtung nach einem der vorhergehenden Ansprüche
**dadurch gekennzeichnet, dass**
die steuerbare Kabelgabel (10, 10a) eine Kraftüberwachungseinrichtung zur Überwachung der Klemmkraft der Klemmmechanik (13) und/oder einer Spannkraft der Bewegungseinrichtung (16) aufweist.

6. Vorrichtung nach einem der vorhergehenden Ansprüche
**dadurch gekennzeichnet, dass**
die Klemmmechanik (13) einen drehgelenkig mit dem Antrieb verbundenen Bügel (14) aufweist, der von einer Öffnungsstellung, in welcher der Bügel (14) einen Kabel-Aufnahmebereich (11) zwischen zwei starren Schenkeln (12, 12b) der steuerbaren Kabelgabel (10, 10a) freigibt, in eine Bündelungsstellung verschwenkbar ist, in welcher der Bügel (14) in den Kabel-Aufnahmebereich (11) eingreift, um ein oder mehrere zwischen den Schenkeln (12, 12b) lose angeordnete Kabel (31) zu bündeln.

7. Vorrichtung nach einem der Ansprüche 1 bis 5
**dadurch gekennzeichnet, dass**
die Klemmmechanik (13) zwei bewegliche Schenkel (12, 12a) der steuerbaren Kabelgabel (10, 10a) umfasst, die über ein Scherengelenk (20) so mit dem Antrieb (15) verbunden sind, dass die beweglichen Schenkel (12, 12a) von einer Öffnungsstellung, in welcher ein Kabel-Aufnahmebereich (11) zwischen den beweglichen Schenkeln (12, 12a) zum Einlegen von Kabeln (31) zugänglich ist, in eine Bündelungsstellung überführbar sind, in welcher die beweglichen Schenkel (12, 12a) zangenartig zusammengeführt sind.

8. System zur Montage von Kabelbäumen mit einer Montageplatte (21) und wenigstens einer Vorrichtung nach einem der vorhergehenden Ansprüche, wobei die steuerbare Kabelgabel (10, 10a) der Vorrichtung zu einer weiteren Kabelgabel (10) beabstandet positioniert und mittels der Bewegungseinrichtung (16) gegenüber der Montageplatte (21) relativbewegbar ist.

9. System nach Anspruch 7
**dadurch gekennzeichnet, dass**
ein Wickelautomat zum Umwickeln des Kabelbündels (30) vorgesehen ist, der zwischen wenigstens zwei Kabelgabeln (10) entlang des Leitungswegs verlagerbar ist.

10. Verfahren zur Montage von Kabelbäumen mit einem System nach einem der Ansprüche 8 oder 9, umfassend die folgenden Schritte:
- Einlegen mehrerer einzelner Kabel (31) in zwei benachbarte Kabelgabeln (10), wobei wenigstens eine Kabelgabel (10) durch eine steuerbare Kabelgabel (10a) gebildet ist;
- Bündeln und Fixieren der Kabel (31) zur Bildung eines Kabelbündels (30) durch Schließen der Klemmmechanik (13) der steuerbaren Kabelgabel (10a);
- Spannen des Kabelbündels (30) durch Drehen der steuerbaren Kabelgabel (10a) und/oder lineares Verfahren der steuerbaren Kabelgabel (10a) in eine erste Richtung;
- Umwickeln des gespannten Kabelbündels (30) mit einem Wicklungsband, insbesondere mittels eines Wickelautomaten; und
- Entspannen des Kabelbündels (30) durch Drehen und/oder lineares Verfahren der steuerbaren Kabelgabel (10a) in eine zweite Richtung, die der ersten Richtung entgegengesetzt ist.
